(19) Europäisches Patentamt
European Patent Office
Office européen des brevets

(11) Publication number: 0 337 624 B1

(12) EUROPEAN PATENT SPECIFICATION

(45) Date of publication of patent specification: 27.10.93 (51) Int. Cl.[5]: A01N 43/80, C02F 1/50

(21) Application number: 89302995.9

(22) Date of filing: 28.03.89

# (54) Control of oilfield biofouling.

(30) Priority: 11.04.88 US 179698

(43) Date of publication of application:
18.10.89 Bulletin 89/42

(45) Publication of the grant of the patent:
27.10.93 Bulletin 93/43

(84) Designated Contracting States:
DE FR GB NL

(56) References cited:
GB-A- 2 118 925

OIL & GAS JOURNAL, vol. 80, no. 10, 8th March 1982, pages 253-264, Pennwell Publishing Co., Tulsa, US; I. RUSESKA et al.: "Biocide testing against corrosion-causing oil-field bacteria helps control plugging"

(73) Proprietor: ROHM AND HAAS COMPANY
Independence Mall West
Philadelphia Pennsylvania 19105(US)

(72) Inventor: Haack, Thomas Kenneth
209 Franklin Court
North Wales Pennsylvania 19454(US)

(74) Representative: Angell, David Whilton et al
ROHM AND HAAS (UK) LTD.
European Operations Patent Department
Lennig House
2 Mason's Avenue
Croydon CR9 3NB (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.6/3.3.1)

## Description

This invention is concerned with the control of oilfield biofouling so increasing recovery of oil in water flooding operations. This involves reducing the content and inhibiting the growth and activity of sessile bacteria especially sulfate reducing bacteria during the recovery of oil from oil-bearing strata by water flooding, by using initially an effective amount of a fast acting biocide sufficient to reduce the sessile and planktonic bacteria population in the system followed by continuous addition of effective amount of one or more isothiazolones.

## BACKGROUND OF THE INVENTION

### 1. Field of the Invention

Waterflooding is widely used in the petroleum industry to effect the recovery of oil. This process increases the total yield of oil present in a formation beyond what is usually recovered in the primary process. It is desirable in this process to maintain a high rate of water injection with a minimum expenditure of energy. Any impediment to the free entry of water to oil-bearing formations seriously reduces the efficiency of the recovery operation.

Waterflooding systems provide an ideal environment for growth and proliferation of biofilms. Large amounts of water are transported through these systems and injected into oil bearing formations in an effort to maintain reservoir pressure or increase the mobility of oil through the formation to producing wells. The large surface area of the water distribution network encourages biofouling which is the attachment and growth of bacteria on the pipe walls.

Biofouling caused by anaerobic bacteria is compounded in waterfloods by the practice of removing oxygen from the water before injection. The removal of oxygen is done to minimize corrosion of equipment; however, the anoxic conditions provide an ideal environment for the growth of sulfate reducing bacteria (SRB) in the biofilms. This phenomenon is observed both on the injection side and producing side of the waterflood operation. The metabolic activity of these bacteria can lead to accelerated corrosion rates, plugging of filters, health hazards from the sulfide production, and eventual souring of the formation (a sour well contains hydrogen sulfide).

### 2. Description of the Prior Art

A common method used to control biofouling is regular application of a biocide. The biocide is generally selected based on its performance in a standard laboratory evaluation test. Until recently, the test did not address the bacteria in a biofilm, but focused on microorganisms in the bulk fluid (planktonics). Planktonic organisms are more easily killed than their sessile counterparts because they lack protection afforded by the extracellular polymeric matrix that is an integral part of the biofilm consortia. Nonetheless, the test is still commonly used because of its convenience.

Glutaraldehyde (pentanedial) is commonly used as the biocide to control biofouling, although large amounts are required. If not stored properly, it is unstable on storage. Means for increasing its efficiency have involved admixture with quaternary ammonium halide or phosphonium halide compounds, such as benzyltrimethylammonium halide and the like.

## DESCRIPTION OF THE INVENTION AND THE PREFERRED EMBODIMENTS

We have now found that an effective and cost-efficient means for reducing sessile SRB which create biofilm fouling and generate hydrogen sulfide comprises first adding an effective amount of one or more alkanedials, for example $C_3$-$C_7$ alkanedials, and then adding, by controlled sequential addition, an effective amount of isothiazolone of the formula:

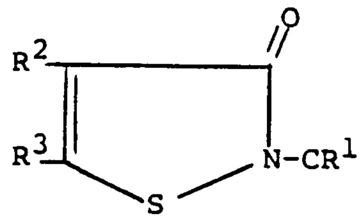

wherein $R^1$ is ($C_1$-$C_8$)-alkyl or cycloalkyl; $R^2$ is H or halo and $R^3$ is H or halo. A preferred isothiazolone, is 5-chloro-2-methylisothiazolone.

Illustrative of quick-kill biocides are alkanedials for example lower alkanedials such as $C_1$-$C_8$ alkane dials such as propanedial, butanedial, pentanedial, hexanedial and the like. Preferred is pentanedial (glutaraldehyde). Levels of glutaraldehyde to be used will vary depending on the degree of biofouling in the system, but amounts from about 50 ppm to about 1000 ppm will normally be used.

Additional substances may be added, such as surfactants, compatible biocides, and the like including quaternary salts, such as quaternary ammonium or phosphonium halide salts with organic groups; for example benzyltrialkyl ammonium halides or ADBACs. The preferred level of quaternary is from about 10 to about 50% of the major quick-kill biocide used.

Although isothiazolones, (I, supra) may be used as quick-kill biocides their effectiveness is reduced by hydrogen sulfide formed by the existing SRB. Isothiazolones are, however, very effective in preventing the formation of hydrogen sulfide by maintaining a low level of SRB and inhibiting their metabolic activity.

Although other control biocides, such as MBT, DBNPA or metronidazole, acrolein may be added at low levels to a cleansed system for maintenance of low levels of SRB, isothiazolones, especially the mixture of 5-chloro-2-methyl-4-isothiazolin-3-one and 2-methyl-4-isothiazolin-3-one is particularly efficient and cost-effective, being operable at levels of from about 0.25 to about 2.5 ppm.

Addition of control biocides may be done on a scheduled basis where small shots are added, or the biocide may be added through a metering pump. It is preferred to add the biocide in aqueous or aqueous-compatible systems, such as water solution or emulsified dispersion.

If the level of metered control biocide is insufficient to maintain the SRB content at a low level, a buildup of biofilm and of hydrogen sulfide may occur. The slug dose of quick-kill biocide may be repeated. Even if such should occur, the economics of control are more favorable and the overall clean condition of the waterflood system is improved versus the older system of multiple and frequent use of quick-kill biocides.

The combination of alkanedial and isothiazolone is effective in salt or fresh water at any temperature that will support microbial growth. The systems may be static, but in operation, there is motion of water throughout the system. The combination is functional in systems exposed to oxygen, but will generally be used where the oxygen content is reduced for reasons such as corrosion resistance.

We have suprisingly found that the alternate use of the two separate biocides specifically required by this invention counteract tolerance by the SRB and the buildup of increased populations. More-over this is achieved with out the need to chlorinate the waters, as has been the custom in the past.

EXPERIMENTAL:

A biofouling loop designed to simulate the activity of sessile-reducing bacteria was designed to include the follows items:

1. an oxygen scrubbing system to provide a source of deionised water into rich bisulfite is added; 2. a seawater salt-nutrients concentrate; 3. a source of inoculum for a SRB biofilm; 4. a mixing chamber for 1, 2,and 3; 5. an entry water reservoir for the mixture from 4 and a source of biocide, for supplying; 6. a recirculation system including; 7. a mild steel sampling section.

1. Removal of oxygen from the fluid entering a mild steel device for studying biofilm is required for the rapid establishment of a stable SRB biofilm. Deionized water from a constant supply flows through three serial nitrogen sparge cylinders. Ammonium bisulfite is metered into the third sparge cylinder. Dissolved oxygen in the deionized water is reduced from 7-9 ppm to <50 ppb by this treatment.

2. A 4X seawater salt-nutrient solution (Table 1) is pumped into the mixing chamber (below) at a rate of 25% of the total fluid flow. The 4X seawater salt-nutrient solution is also sparged with nitrogen.

3. The source of SRB biofilm inoculum is a fixed film reactor (FFR); this concept was adapted from W.G Characklis's laboratory (8). The FFR is a one l graduated cylinder packed with sterile granitic rock that

was inoculated with a mixed culture of aerobes and SRB from North Sea injection water. A seawater containing 60 mg TSB per l is pumped through the rockpile at a rate of six l per day. The effluent from the rockpile is the source of a mixed population of bacteria which can rapidly foul our circulating test loops.

4. The mixer is the source of entry water for each of eight recirculating test loops operating in parallel. Use of a mixer insures that each circulating test loop receives an identical entry water feed and greatly reduces the number of pumps and water-carrying lines required for the operation of multiple test loops.

5. The entry water reservoir is constructed of poly(vinyl chloride) (PVC) pipe and fittings. This is the point of water addition to and drainage from each circulating test loop, and is an integral part of the loop. Fluid is pumped into each circulating loop at a rate of 10 ml per minute. An overflow line maintains a constant volume in the recirculating test loops. Each circulating test loop normally contains 300 ml of anaerobic seawater and the fluid retention time is 30 minutes.

6. Circulation in this system is provided by a magnetic drive centrifugal pump. Flow in the mild steel sampling section is normally 0.6 meters per second. Flow rates can be monitored by either a paddlewheel or magnetic flow sensor, and are controlled with a regulating valve. Neoprene tubing is used to connect the components of the circulating test loop to minimize oxygen diffusion into the loops.

7. The mild steel tube sampling section is an 80 cm length of 1.27 cm o.d. seamless mechanical tubing with an 0.08 cm wall.

To sample the biofilm the mild steel tube is wiped with ethanol and a two cm piece cut off with a tubing cutter. This yields a coupon with a 7.0 $cm^2$ sample surface. The inside of the coupon is rinsed with sterile artificial sea water. The biofilm is scraped from the mild steel sample with a sterile microspatula. The biofilm and the coupon are placed in a stoppered tube containing 10 ml of sterile anaerobic artificial seawater and sonicated minutes in ultrasonic cleaning bath to disperse the biofilm. Viable counts of SRB and aerobes are determined by the most probable number (MPN) technique.

Viable aerobic bacteria counts are determined with a medium containing 20 gm TSB per l. The medium used to determine SRB counts appears in Table 2. This medium is a modification of that used in API RP 38. (Ref.) (N-tris[hydroxymethyl]methyl-2-amino-ethanesulfonic acid) is used to buffer the medium in place of phosphate. The medium is supplemented with ammonium, calcium and trace metals (Table 3). The SRB medium is dispensed anaerobically in disposable Hungate-type tubes (Bellco Glass, Inc.). SRB tubes are incubated for one week after innoculation and scored for growth. Experience indicates that the ultimate counts can be determined within this time.

pH is determined with a calomel combination microelectrode. Total sulfide is determined using the methylene blue assay. Dissolved oxygen is measured using CHEMets (CHEMetrics, Inc.).

Glutaraldehyde was added as a 20% aqueous solution, which also contained 5% of a quaternary ammonium compound. The isothiazolone mixture is a 1.5% aqueous solution of a mixture of the chlorinated and non-chlorinated materials. The mixture is about 4 to 1 of the chlorinated to non-chlorinated.

EXAMPLE 1

The following Table shows the effect of continuous dosing on sessile bacteria in biofouling loops under high fouling pressure.

| TREATMENT | DAY OF TREATMENT | AEROBES/$CM^2$ | SRB/$CM^2$ | $H_2S$ PPM |
|---|---|---|---|---|
| CONTROL | 4 | $1 \times 10^6$ | $2 \times 10^5$ | 2.5 |
| | 7 | $2 \times 10^6$ | $2 \times 10^8$ | 3.1 |
| | 11 | $7 \times 10^6$ | $2 \times 10^8$ | 3.0 |
| | 17 | $3 \times 10^6$ | $1 \times 10^8$ | 2.9 |
| Isothiazolone[1] | 4 | $9 \times 10^3$ | $3 \times 10^3$ | <0.05 |
| 0.5 PPM AI | 7 | $6 \times 10^3$ | $3 \times 10^4$ | <0.05 |
| | 11 | $2 \times 10^4$ | $3 \times 10^3$ | <0.05 |
| | 17 | $2 \times 10^2$ | $2 \times 10^4$ | 0.1 |
| Isothiazolone | 4 | $1 \times 10^4$ | $3 \times 10^5$ | <0.05 |
| 1.0 PPM AI | 7 | $4 \times 10^3$ | $3 \times 10^3$ | 0.1 |
| | 11 | $7 \times 10^2$ | $3 \times 10^2$ | 0.1 |
| | 17 | $2 \times 10^3$ | 30 | 0.1 |

[1] Mixture of 5-chloro-2-methyl-4-isothiazolin-3-one (75%) and 2-methyl-4-isothiazolin-3-one (25%)

| TREATMENT | DAY OF TREATMENT | AEROBES/$CM^2$ | SRB/$CM^2$ | $H_2S$ PPM |
|---|---|---|---|---|
| GLUT/QUAT | | | | |
| 6.8/1.7 PPM AI | 4 | $3 \times 10^6$ | $3 \times 10^6$ | <0.05 |
| | 7 | $5 \times 10^6$ | $3 \times 10^7$ | 1.7 |
| | 11 | $2 \times 10^6$ | $3 \times 10^6$ | 2.1 |
| | 17 | $4 \times 10^6$ | $2 \times 10^8$ | 2.0 |
| GLUT/QUAT | | | | |
| 13.2/3.3 PPM AI | 4 | $4 \times 10^5$ | $3 \times 10^5$ | <0.05 |
| | 7 | $1 \times 10^5$ | $3 \times 10^5$ | 0.1 |
| | 11 | $3 \times 10^5$ | $2 \times 10^5$ | 1.5 |
| | 17 | $4 \times 10^6$ | $3 \times 10^7$ | 1.2 |

Isothiazolones at low levels partially suppresses or totally eliminates SRB growth or hydrogen sulfide generation by SRB. At similar levels, glutaraldehyde is ineffective. The use of only the isothiazolone requires some time before truly low levels (below $10^3$) of SRB are reached. Even at sublethal concentrations (0.5 ppm ai) of isothiazolone, hydrogen sulfide development is suppressed quickly, suggesting that the isothiazolone is also an effective preventor of hydrogen sulfide formation by SRB.

EXAMPLE 2

The following data shows values for the SRB content as a function of time in weeks. After withdrawal of samples for measurement, the system was "slugged" with the glutaraldehyde/quaternary formulation twice/week; the ai concentration was 150/37 ppm ai over a four-hour period. The system had been allowed to foul for four weeks prior to treatment.

| TREATMENT | WEEK OF TREATMENT | LOG SRB/CM$^2$ | SRB/CM$^2$ |
|---|---|---|---|
| CONTROL | 0 | 5.3 | $2 \times 10^5$ |
| | 1 | 5.3 | $2 \times 10^5$ |
| | 2 | 4.7 | $5 \times 10^4$ |
| | 3 | 5.7 | $5 \times 10^5$ |
| | 4 | 4.7 | $5 \times 10^4$ |
| | 5 | 6.4 | $3 \times 10^6$ |
| GLUT/QUAT 150/37 PPM AI | 0 | 4.6 | $4 \times 10^4$ |
| | 1 BS | 4.6 | $4 \times 10^4$ |
| | 1 AS | <1 | <10 |
| | 2 BS | 4.7 | $5 \times 10^4$ |
| | 2 AS | <1 | <10 |
| | 3 BS | 3.6 | $4 \times 10^3$ |
| | 3 AS | <1 | <10 |
| | 4 BS | 3.3 | $2 \times 10^3$ |
| | 4 AS | 3.5 | $3 \times 10^3$ |
| | 5 BS | 5.1 | $1 \times 10^5$ |
| | 5 AS | 4.5 | $3 \times 10^4$ |

BS: sampled before slug of glutaraldehyoe/quaternary begun

AS: sampled after end of four-hour addition of glut/quat slug.

Note that although the "slug" technique rapidly reduces the SRB count in the early portion of the experiment, within one week the initial content is regained. Further, the relative ineffectiveness in later weeks may indicate development of tolerance by the SRB for the glutaraldehyde/quaternary combination.

EXAMPLE 3

In the following example, loops were pre-fouled for four weeks prior to biocidal treatment. A "slug" of glutaraldehyde/quaternary was added as in Example 2, then the isothiazolone was metered at 0.25 ppm. continuously. It will be seen the SRB count dropped immediately and was maintained below a level of undesirable buildup, correlated to ca. 1000 SRB/cm2.

| TREATMENT | WEEK OF TREATMENT | LOG SRB/CM$^2$ | SRB/CM$^2$ |
|---|---|---|---|
| CONTROL | 0 | 5.5 | 3 x $10^5$ |
| | 1 | 5.5 | 3 x $10^5$ |
| | 2 | 4.5 | 3 x $10^4$ |
| | 3 | 5.5 | 3 x $10^5$ |
| | 4 | 4.3 | 2 x $10^4$ |
| | 5 | 6.4 | 3 x $10^6$ |
| GLUT/QUAT | 0 | 6.5 | 3 x $10^6$ |
| 150/37 PPM AI | 1 BS | 6.5 | 3 x $10^6$ |
| followed by | 1 AS | <1 | <10 |
| 0.5 PPM of | 2 | 1.3 | 20 |
| Isothiazolone | 3 | 1.2 | 16 |
| (Continuous) | 4 | 2.2 | 160 |
| | 5 | 2.2 | 160 |

In the foregoing:
TSB is trypticase soy broth, a bacteria culture medium;
API RP 38 is the American Petrolium Institute Analytical method for bacteria and biocide efficacy in oilfield waters;
ADBAC indicates a family of quaternary compounds, Alkyldimethyl benzyl ammonium chloride;
MBT is methylene bis thocyanate;
DBNPA is dibromonitrilo propiconamide; and
a 4X solution is an artificially prepared solution at four times normal concentration.

## Claims

1. A process for controlling biologic contamination of oil production systems waters by sessile bacteria which comprises the following course of treatment:
   a) addition of a biocidally effective amount of one or more alkanedials; followed by
   b) The addition by controlled sequential or continuous addition, of a biocidally effective amount of one or more isothiazolones of the formula:

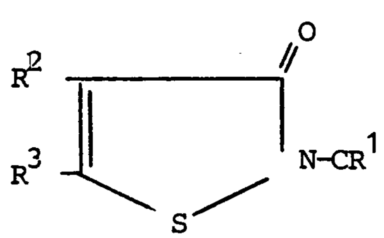

   wherein $R^1$ is $(C_1$-$C_8)$alkyl or cycloalkyl; $R^2$ is H or halo and $R^3$ is H or halo.

2. A process of Claim 1 wherein the sessile bacteria are sulfate-reducing.

3. A process of Claim 1 or 2 wherein the waters are substantially free from oxygen during the treatment.

4. A process of any preceding Claim where the isothiazolone comprises 5-chloro-2-methylisothiazolin-3-one.

5. A process of any preceding Claim where the alkanedial comprises ($C_1$-$C_8$)-alkanedial, preferably pentanedial.

6. A process of any preceding Claim wherein a quaternary ammonium or phosphonium salt is also added in a biocidally effective amount, preferably a quaternary ammonium halide or phosphonium halide.

7. A process of any preceding Claim wherein the amount of glutaraldehyde added is from 50 to 4000 ppm.

8. A process of any preceeding Claim wherein the amount of isothiazolone added is from 0.25 to 5 ppm.

9. A process of any preceding Claim wherein the course of treatment is repeated whenever the sessile bacteria level in the waters surpasses a count of about 1000 SRB/$cm^2$.

10. A process of any preceeding Claim wherein the waters treated comprise secondary oil-field waters.

**Patentansprüche**

1. Verfahren zum Steuern der biologischen Verunreinigung von Wasser von Ölgewinnungsanlagen durch festsitzende Bakterien durch den folgenden Behandlungsablauf,
   a) Zusetzen einere biozidwirksamen Menge eines oder mehrerer Alkandiale und anschließend
   b) Zusetzen in einer gesteuerten Schrittfolge oder kontinuierliches Zusetzen einer biozidwirksamen Menge eines oder mehrerer Isothiazolone der Formel

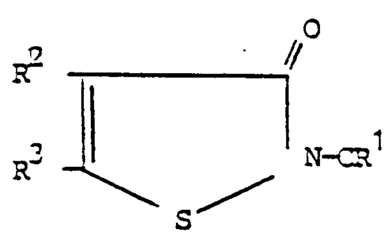

   in der $R^1$ ($C_1$ -$C_8$)-Alkyl oder -Cycloalkyl ist, $R^2$ H oder Halogen ist und $R^3$ H oder Halogen ist.

2. Verfahren nach Anspruch 1,
   **dadurch gekennzeichnet,**
   daß die festsitzenden Bakterien sulfatverringernd wirken.

3. Verfahren nach Anspruch 1 oder 2,
   **dadurch gekennzeichnet,**
   daß die Wasser während der Behandlung im wesentlichen sauerstoffrei sind.

4. Verfahren nach einem der vorstehenden Ansprüche,
   **dadurch gekennzeichnet,**
   daß das Isothiazolon 5-Chlor-2-methylisothiazolin-3-on enthält.

5. Verfahren nach einem der vorstehenden Ansprüche,
   **dadurch gekennzeichnet,**
   daß das Alkandial ($C_1$-$C_8$)-Alkandial, vorzugsweise Pentandial, enthält.

6. Verfahren nach einem der vorstehenden Ansprüche,
   **dadurch gekennzeichnet,**

daß noch ein quaternäres Ammonium- oder Phosphoniumsalz, vorzugsweise ein quaternäres Ammoniumhalid oder Phosphoniumhalid, in einer biozidwirksamen Menge zugesetzt wird.

**7.** Verfahren nach einem der vorstehenden Ansprüche, **dadurch gekennzeichnet,** daß Glutaraldehyd in einer Menge von 50 bis 4000 ppm zugesetzt wird.

**8.** Verfahren nach einem der vorstehenden Ansprüche, **dadurch gekennzeichnet,** daß Isothiazolon in einer Menge von 0,25 bis 5 ppm Zugesetzt wird.

**9.** Verfahren nach einem der vorstehenden Ansprüche, **dadurch gekennzeichnet,** daß der Behandlungsablauf immer dann wiederholt wird, wenn das Niveau der festsitzenden Bakterien in dem Wasser eine Zahl von etwa 1000 SRB/$cm^2$ überschreitet.

**10.** Verfahren nach einem der vorstehenden Ansprüche, **dadurch gekennzeichnet,** daß das zu behandelnde Wasser sekundäres Wasser von Ölfeldern enthält.

**Revendications**

**1.** Procédé de contrôle de la contamination biologique d'eaux de systèmes de production d'hydrocarbures par des bactéries sessiles, comprenant les étapes suivantes :

a) addition d'une quantité biocide efficace d'un ou plusieurs alkanedials, suivie de

b) l'addition en séquence contrôlée ou en continu d'une quantité biocide efficace d'un ou plusieurs isothiazolones de formule :

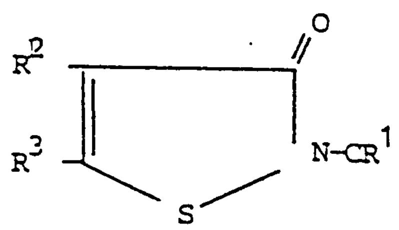

dans laquelle $R^1$ est un groupe alkyle ou cycloalkyle en $C_1$-$C_8$, $R^2$ est H ou un halogène et $R^3$ est H ou un halogène.

**2.** Procédé selon la revendication 1, dans lequel les bactéries sessiles sont réductrices de sulfates.

**3.** Procédé selon la revendication 1 ou 2, dans lequel les eaux sont sensiblement exemptes d'oxygène au cours du traitement.

**4.** Procédé selon l'une quelconque des revendications précédentes, dans lequel l'isothiazolone est constituée de 5-chloro-2-méthylisothiazoline-3-one.

**5.** Procédé selon l'une quelconque des revendications précédentes, dans lequel l'alkanedial est un alkanedial en $C_1$-$C_8$, de préférence le pentanedial.

**6.** Procédé selon l'une quelconque des revendications précédentes, dans lequel un sel d'ammonium quaternaire ou de phosphonium est également ajouté en quantité biocide efficace, de préférence un halogénure d'ammonium quaternaire ou un halogénure de phosphonium.

**7.** Procédé selon l'une quelconque des revendications précédentes, dans lequel la quantité de glutaraldéhyde ajoutée est de 50 à 4.000 ppm.

8. Procédé selon l'une quelconque des revendications précédentes, dans lequel la quantité d'isothiazolone ajoutée est de 0,25 à 5 ppm.

9. Procédé selon l'une quelconque des revendications précédentes, dans lequel les opérations de traitement sont répétées chaque fois que le niveau de bactéries sessiles dans les eaux dépasse un compte d'environ 1.000 SRB/$cm^2$.

10. Procédé selon l'une quelconque des revendications précédentes, dans lequel les eaux traitées sont constituées d'eaux de champs pétroliers secondaires.